# EUROPÄISCHE PATENTSCHRIFT

(11) **EP 1 544 530 B1**
(45) Veröffentlichungstag und Bekanntmachung des Hinweises auf die Patenterteilung: **24.05.2006**
(21) Anmeldenummer: 04024630.8
(22) Anmeldetag: 15.10.2004
(51) Int. Cl.: F16L 33/04

(54) **Schlauchkupplung**
Hose coupling
Raccord pour tuyaux flexibles

(30) Priorität: 19.12.2003 DE 10359799
(43) Veröffentlichungstag der Anmeldung: 22.06.2005
(73) Patentinhaber: Rasmussen GmbH, 63477 Maintal (DE)
(72) Erfinder: Henrich, Detlef, 63694 Limeshain (DE); Krauss, Mathias, 63477 Maintal (DE); Lebo, Goran, 63071 Offenbach/Main (DE); Mann, Stephan, 63599 Bieber (DE)
(74) Vertreter: Knoblauch, Andreas

(56) Entgegenhaltungen:
- EP-A- 0 286 561
- WO-A-85/02894
- DE-A1- 2 919 939
- GB-A- 1 523 201

## Beschreibung

Die Erfindung bezieht sich auf eine Schlauchkupplung mit einer um eine Längsachse herum spannbaren Schelle, deren Ränder näher bei der Längsachse liegen als der zwischen den Rändern liegende Bereich, und mit einem Rohr, auf dessen einen Endabschnitt ein Endabschnitt des Schlauches aufsteckbar und mittels der Schelle festklemmbar ist, wobei der Endabschnitt des Rohres mit einer umlaufenden Halterippe versehen ist, über die der Endabschnitt des Schlauches hinwegschiebbar und über der die Schelle auf dem Schlauch spannbar ist, so daß der Schlauch zwischen Halterippe und Schelle eingeklemmt ist, wobei die Schelle ein kreisförmig umlaufendes Spannband aus Metall aufweist.

Bei einer bekannten Schlauchkupplung dieser Art (DE 29 19 939 A1) hat das Spannband die Form eines C-Rings mit an seinen Enden angeformten Spannbacken, durch die eine Spannschraube hindurchgeführt wird.

Die Kontur des axialen Querschnitts des Spannbands ist innen bevorzugt trapezförmig, außen jedoch etwa rechteckförmig. Alternativ soll das Spannband im axialen Querschnitt innen beispielsweise auch kreissegmentförmig oder elliptisch sein können. Das Rohr ist beispielsweise ein Rohrstutzen, der aus Kunststoff besteht. Die Kontur des axialen Querschnitts der Halterippe ist entsprechend der Innenkontur des Spannbands geformt, d.h. ebenfalls bevorzugt trapezförmig oder beispielsweise kreisförmig oder elliptisch. Das Spannband hat daher ein hohes Flächenträgheitsmoment und ist mithin gerade hinreichend biegsam, um die Schelle zu spannen. Es erfordert daher eine entsprechend hohe Spannkraft und ist mithin nicht in der Lage, einem durch den radialen Einspanndruck der Schelle bedingten Ausweichen ("Wegfließen") des Schlauchmaterials elastisch zu folgen, um selbsttätig für eine bleibende Dichtheit der Verbindung von Schlauch und Rohr zu sorgen. Die Dichtheit der Verbindung beruht im wesentlichen darauf, daß das elastische Schlauchmaterial im Raum zwischen Spannband und Halterippe unter Vorspannung gehalten wird. Wenn die Elastizität des Schlauchmaterials aufgrund des Einspanndrucks und einer Wärmealterung nachläßt, kann die Verbindung bei hohem Fluiddruck im Schlauch und Rohr dennoch undicht werden.

Aus der EP 0 166 756 B1 ist es bekannt, zwischen einer Schneckengewindeschelle und einem auf einem glatten (ungerippten) Metallrohr festzuklemmenden Schlauch ein federndes, gleichmäßig dickes Metallband anzuordnen, dessen axiale Querschnittskontur in einem axial mittleren Bereich nach außen gleichmäßig gewölbt und an den Rändern des mittleren Bereiches mit radial nach innen gewölbten Wulsten versehen ist. Das Metallband wird beim Spannen der Schneckengewindeschelle mit seinem mittleren Bereich und den Wulsten gegen den Schlauch gedrückt. Dadurch wird das Schlauchmaterial im Bereich zwischen den Wulsten axial und radial verpreßt, um eine möglichst hohe Dichtwirkung durch das elastische Schlauchmaterial im mittleren Bereich des Metallbands zwischen den Wulsten zu erzielen. Gleichzeitig soll das Metallband ein selbsttätiges Nach-Dichten bei nachlassender Elastizität des Schlauchmaterials ermöglichen, weil die Wulste mit radialer Federvorspannung auf den Schlauch drücken und bei nachgebendem Schlauchmaterial elastisch nachsetzen sollen. Abgesehen davon, daß die das Spannen des Metallbands bewirkende Schneckengewindeschelle aufwendig ist, behindert sie die freie elastische Beweglichkeit des Metallbands. Darüber hinaus tragen die Wulste wegen ihres hohen Flächenträgheitsmoments zur Versteifung des Metallbands bei.

Der Erfindung liegt die Aufgabe zugrunde, eine Schlauchkupplung der eingangs geschilderten Art anzugeben, die bei einfachem Aufbau eine hohe Dichtigkeit der Verbindung zwischen Schlauch und Rohr gewährleistet, und zwar unabhängig von einer Wärmealterung und einer bleibenden Verformung (einem "Wegfließen") des Schlauchmaterials unter dem Einspanndruck.

Erfindungsgemäß ist diese Aufgabe dadurch gelöst, daß das Spannband elastisch und gleichmäßig dick ist und daß der zwischen den Rändern des Spannbands liegende Bereich des Spannbands im gespannten Zustand der Schelle einen Abstand vom Schlauch aufweist.

Bei dieser Lösung hat die Schelle ein geringeres Flächenträgheitsmoment als die gattungsgemäße Schelle. Sie hat daher eine hohe elastische Flexibilität um zu ihrer Längsachse senkrecht stehende Querachsen. Ihre Ränder können leicht einer alterungs- oder druckbedingten Verringerung der Schlauchdicke nachsetzen und den Schlauch weiterhin fest ans Rohr klemmen, ohne daß die Schelle nachgespannt werden muß, um die Verbindung dicht zu halten. Desgleichen kann die Schelle in einem großen Temperaturschwankungsbereich, von etwa -40°C bis 200°C, Änderungen der Abmessungen des Rohres und des Schlauches sowie ihrer eigenen Abmessungen nachgeben oder nachsetzen.

Der erwähnte Abstand trägt zusätzlich dazu bei, daß die radiale Druckkraft der Spannbandränder im Vergleich zu der des mittleren Bereiches zwischen den Rändern des Spannbands relativ hoch ist und für eine hinreichend hohe Klemmwirkung im Bereich der Ränder sorgt, aber das Schlauchmaterial im mittleren Bereich zwischen den Rändern nicht oder nicht zu stark verpreßt wird und mithin keiner bleibenden Druckverformung unterliegt. Dieser Abstand kann dadurch leicht eingehalten werden, daß sich Spannbacken an den Enden des Spannbands bei Erreichen des Abstands aneinander anlegen oder eine die Spannbacken zusammenziehende Spannschraube, z.B. mittels eines Drehmomentschlüssels, nicht über ein Drehmoment hinaus gespannt werden kann, bei dem der Abstand erreicht ist.

Eine vorteilhafte Ausgestaltung kann darin bestehen, daß die radial äußere Kontur des axialen Querschnitts der Halterippe gleichmäßig gewölbt ist, wobei die radial äußere Kontur des axialen Querschnitts der Halterippe kreisbogenförmig sein kann. Eine derartige Form läßt sich leicht herstellen und verhindert hohe Flächenpressungen im Schlauch an Kanten der Halterippe.

Sodann kann der Umkreis der Halterippe an ihrem im zusammengesteckten Zustand von Rohr und Schlauch auf Seiten des im Schlauch liegenden freien Rohrendes kleiner als der Umkreis an ihrem anderen Ende sein. Diese Form erleichtert das Aufschieben des Schlauches auf und bis über die Halterippe.

Auch die Querschnittskontur des Spannbands zwischen seinen Rändern kann radial nach außen gleichmäßig gewölbt, vorzugsweise kreisbogenförmig sein. Diese Form des Spannbandes läßt sich ebenfalls leicht herstellen und verhindert zu hohe Flächenpressungen zwischen Schlauch und Spannband, wenn das Spannband zu stark gespannt wird.

Sodann kann dafür gesorgt sein, daß der Krümmungsradius der radial äußeren Kontur des axialen Querschnitts der Halterippe größer als der Krümmungsradius der inneren Kontur des axialen Querschnitts des Spannbands ist. Der Druck des Spannbands wird hierbei hauptsächlich im Bereich der Halterippe auf den Schlauch ausgeübt, so daß sich der Schlauch auch bei hoher Axialbelastung der Verbindung nicht so lange weiterverschieben kann, bis Halterippe und Spannband zusammenwirken.

Vorzugsweise besteht das Rohr aus Metall, insbesondere Leichtmetall. Dieses Material trägt nicht nur zur Verringerung des Gesamtgewichts eines Aggregats bei, z.B. eines Kraftfahrzeugs, in dem der Schlauch an einem Rohr, z.B. am Rohrstutzen des Kühlers, angeschlossen wird, sondern ist auch alterungsbeständiger, insbesondere gegenüber Temperaturschwankungen, als Kunststoff.

Die Erfindung und ihre Weiterbildungen werden nachstehend anhand der beiliegenden Zeichnungen eines bevorzugten Ausführungsbeispiels näher beschrieben. Darin stellen dar:

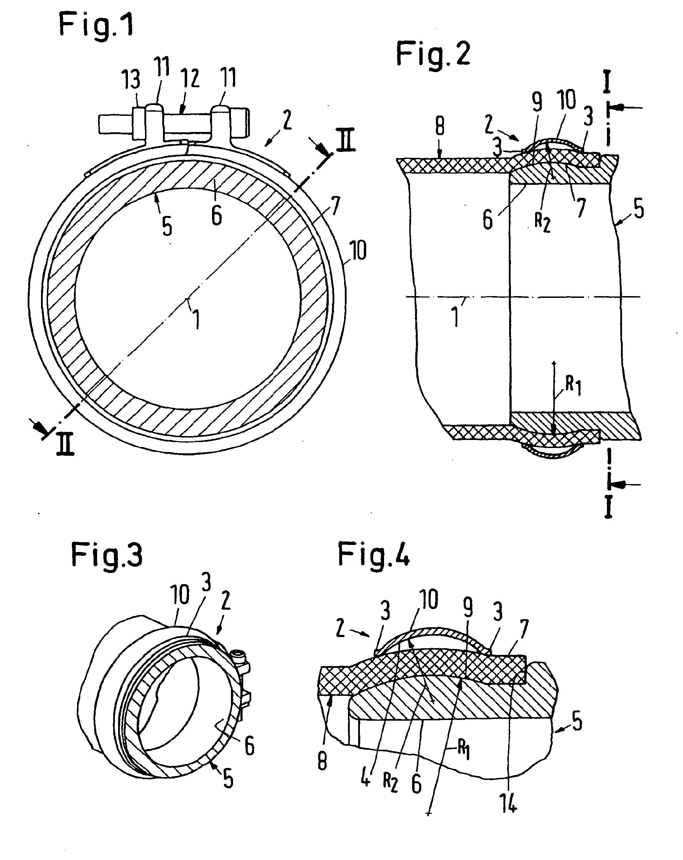

- Fig. 1: den Querschnitt I-I der Fig. 2 der erfindungsgemäßen Schlauchkupplung,
- Fig. 2: den Querschnitt II-II der Fig. 1,
- Fig. 3: eine perspektivische Ansicht des Querschnitts I-I der Fig. 2 und
- Fig. 4: einen vergrößerten Ausschnitt der Fig. 2.

Die dargestellte Schlauchkupplung hat eine um eine Längsachse 1 herum spannbare Schelle 2, deren Ränder 3 näher bei der Längsachse 1 liegen als der zwischen den Rändern 3 liegende Bereich 4, und ein Rohr 5, auf dessen einen Endabschnitt 6 ein Endabschnitt 7 des Schlauches 8 aufsteckbar und mittels der Schelle 2 festklemmbar ist. Der Endabschnitt 6 des Rohres 5 ist mit einer umlaufenden Halterippe 9 versehen, über die der Endabschnitt 7 des Schlauches 8 hinwegschiebbar und über der die Schelle 2 auf dem Schlauch 8 spannbar ist, so daß der Schlauch 8 zwischen Halterippe 9 und Schelle 2 eingeklemmt wird. Die Schelle 2 weist ein elastisches Spannband 10 aus Metall auf. Das Spannband 10 hat die Form eines C-Rings, auf dessen Enden Spannbacken 11 befestigt sind, z.B. durch Nieten oder Schweißen. Durch die Spannbacken ist eine Schraube 12 hindurchgeführt, deren Kopf an der einen Spannbacke anliegt und die durch eine an der anderen Spannbacke 11 anliegende Mutter 13 hindurchgeschraubt ist.

Der zwischen den Rändern 3 des Spannbands 10 liegende Bereich hat im gespannten Zustand der Schelle 2 einen Abstand vom Schlauch 8.

Die radial äußere Kontur des axialen Querschnitts der Halterippe 9 ist gleichmäßig gewölbt, vorzugsweise kreisbogenförmig. Der Umkreis der Halterippe 9 an ihrem im zusammengesteckten Zustand von Rohr 5 und Schlauch 8 auf Seiten des im Schlauch 8 liegenden freien Rohrendes ist kleiner als der Umkreis an ihrem anderen Ende.

Die Querschnittskontur des Spannbands 10 zwischen seinen Rändern 3 ist ebenfalls radial nach außen gleichmä-βig gewölbt, vorzugsweise kreisbogenförmig.

Der Krümmungsradius R₁ der radial äußeren Kontur des axialen Querschnitts der Halterippe 9 ist größer als der Krümmungsradius R₂ der inneren Kontur des axialen Querschnitts des Spannbands 10.

Das Rohr 5 besteht aus Metall, insbesondere Leichtmetall, hier Aluminium.

Die Schelle 2 mit dem elastischen Spannband 10 gleichmäßiger Dicke aus Metall auszubilden, hat den Vorteil, daß das Spannband 10 ein geringes Flächenträgheitsmoment aufweist, so daß sie eine hohe elastische Flexibilität um zu ihrer Längsachse 1 senkrecht stehende Querachsen hat. Ihre Ränder 3 können leicht einer alterungs- oder druckbedingten Verringerung der Schlauchdicke nachsetzen und den Schlauch 8 weiterhin fest ans Rohr 5 klemmen, ohne daß die Schelle 2 nachgespannt werden muß, um die Verbindung dicht zu halten. Ferner kann die Schelle 2 in einem großen Temperaturschwankungsbereich von etwa -40°C bis 200°C Änderungen der Abmessungen des Rohres 5 und des Schlauches 8 sowie ihrer eigenen Abmessungen nachgeben oder nachsetzen. Dennoch ist ihre Steifigkeit hinreichend hoch, um den Schlauch 8 in Verbindung mit der Halterippe 9 gegen hohe axiale Druckkomponenten des durch den Schlauch 8 und das Rohr 5 geleiteten Fluids sicher auf dem Rohr 5 festzuklemmen. Der Abstand der zwischen den Rändern 3 des Spannbands 10 liegenden Bereichs vom Schlauch 8 im gespannten Zustand der Schelle 2 trägt zusätzlich dazu bei, daß die radiale Druckkraft der Spannbandränder 3 im Vergleich zu der des mittleren Bereiches 4 zwischen den Rändern 3 des Spannbands 10 relativ hoch ist und für eine hinreichend hohe Klemmwirkung im Bereich der Ränder 3 sorgt, aber das Schlauchmaterial im mittleren Bereich zwischen den Rändern 3 nicht oder nicht zu stark verpreßt wird und mithin keiner bleibenden Druckverformung unterliegt. Dieser Abstand kann dadurch leicht eingehalten werden, daß sich die Spannbacken 11 bei Erreichen des Abstands aneinander anlegen oder die Spannschraube 12 nicht über ein Drehmoment hinaus, bei dem der Abstand erreicht ist, gespannt werden kann, z.B. mittels eines Drehmomentschlüssels.

Die gleichmäßige, insbesondere kreisbogenförmige, Wölbung der radial äußeren Kontur des axialen Querschnitts der Halterippe 9 verhindert eine hohe Flächenpressung im Endabschnitt 7 des Schlauches 8, im Gegensatz zu einer kantigen Ausbildung der Halterippe 9, und läßt sich leicht herstellen.

Da der Umkreis der Halterippe 9 an ihrem im zusammengesteckten Zustand von Rohr 5 und Schlauch 8 auf Seiten des im Schlauch 8 liegenden freien Rohrendes kleiner als der Umkreis an ihrem anderen Ende ist, kann der Schlauch 8 leicht auf und bis über die Halterippe 9 aufgeschoben werden. Ein Absatz 14 des Rohres 5 oder eine Wand eines Aggregats, z.B. des Kühlers eines Kraftfahrzeugs, an der der Endabschnitt 6 dicht befestigt oder angeformt ist, begrenzt dabei den Aufschubweg des Schlauches 8. Das Rohr ist dementsprechend kurz und bildet nur einen Schlauchstutzen.

Die gleichmäßig, insbesondere kreisbogenförmig, nach außen gewölbte Querschnittskontur des Spannbands 10 zwischen seinen Rändern 3 läßt sich ebenfalls leicht herstellen und verhindert zu hohe Flächenpressungen zwischen Schlauch 8 und Spannband 10, wenn das Spannband 10 zu stark gespannt wird.

Dadurch, daß der Krümmungsradius R₁ der radial äußeren Kontur des axialen Querschnitts der Halterippe 9 größer als der Krümmungsradius R₂ der inneren Kontur des axialen Querschnitts des Spannbands 10 ist, wird der Druck des Spannbands 10 hauptsächlich im Bereich der Halterippe 9 auf den Schlauch 8 ausgeübt, so daß sich der Schlauch 8 auch bei hoher Axialbelastung der Verbindung nicht so lange verschieben kann, bis Halterippe 9 und Spannband 10 zusammenwirken.

Die Ausbildung des Rohres 5 aus Metall, insbesondere Leichtmetall, trägt nicht nur zur Verringerung des Gesamtgewichts eines Aggregats bei, in dem der Schlauch 8 an einem Rohr, z.B. am Rohrstutzen eines Kraftfahrzeug-Kühlers, angeschlossen wird, sondern ist auch alterungsbeständiger, insbesondere gegenüber Temperaturschwankungen, als Kunststoff.

## Patentansprüche

1. Schlauchkupplung mit einer um eine Längsachse (1) herum spannbaren Schelle (2), deren Ränder (3) näher bei der Längsachse (1) liegen als der zwischen den Rändern (3) liegende Bereich (4), und mit einem Rohr (5), auf dessen einen Endabschnitt (6) ein Endabschnitt (7) des Schlauches (8) aufsteckbar und mittels der Schelle (2) festklemmbar ist, wobei der Endabschnitt (6) des Rohres (5) mit einer umlaufenden Halterippe (9) versehen ist, über die der Endabschnitt (7) des Schlauches (8) hinwegschiebbar und über der die Schelle (2) auf dem Schlauch (8) spannbar ist, so daß der Schlauch (8) zwischen Halterippe (9) und Schelle (2) eingeklemmt ist, wobei die Schelle ein kreisförmig umlaufendes Spannband aus Metall aufweist, **dadurch gekennzeichnet, daß** das Spannband (10) elastisch und gleichmäßig dick ist und daß der zwischen den Rändern (3) des Spannbands (10) liegende Bereich (4) des Spannbands (10) im gespannten Zustand der Schelle (2) einen Abstand vom Schlauch (8) aufweist.

2. Schlauchkupplung nach Anspruch 1, **dadurch gekennzeichnet, daß** die radial äußere Kontur des axialen Querschnitts der Halterippe (9) gleichmäßig gewölbt ist.

3. Schlauchkupplung nach einem der Anspruch 1 oder 2, **dadurch gekennzeichnet, daß** die radial äußere Kontur des axialen Querschnitts der Halterippe (9) kreisbogenförmig ist.

4. Schlauchkupplung nach Anspruch 3, **dadurch gekennzeichnet, daß** der Umkreis der Halterippe (9) an ihrem im zusammengesteckten Zustand von Rohr (5) und Schlauch (8) auf Seiten des im Schlauch (8) liegenden freien Rohrendes kleiner als der Umkreis an ihrem anderen Ende ist.

5. Schlauchkupplung nach einem der Ansprüche 1 bis 4, **dadurch gekennzeichnet, daß** die Querschnittskontur des Spannbands (10) zwischen seinen Rändern (3) radial nach außen gleichmäßig gewölbt ist.

6. Schlauchkupplung nach Anspruch 5, **dadurch gekennzeichnet, daß** die Wölbung der Querschnittskontur des Spannbands (10) kreisbogenförmig ist.

7. Schlauchkupplung nach Anspruch 2 und Anspruch 6, **dadurch gekennzeichnet, daß** der Krümmungsradius (R₁) der radial äußeren Kontur des axialen Querschnitts der Halterippe (9) größer als der Krümmungsradius (R₂) der inneren Kontur des axialen Querschnitts des Spannbands (10) ist.

8. Schlauchkupplung nach einem der Ansprüche 1 bis 7, **dadurch gekennzeichnet, daß** das Rohr (5) aus Metall, insbesondere Leichtmetall, besteht.

## Claims

1. A hose coupling with a clamp (2) which can be clamped around a longitudinal axis (1), wherein the edges (3) of the clamp are located closer to the longitudinal axis (1) than the area (4) located between the edges (3) and with a pipe (5) onto one end portion (6) of which an end portion (7) of the hose (8) can be pushed and clamped by means of the clamp, the end portion (6) of the pipe (5) being provided with a circumferential holding rib (9), wherein the end portion (7) of the hose (8) can be pushed across and past the holding rib (9), wherein the clamp (2) can be clamped on the hose (8) above the holding rib (9) so that the hose (8) is clamped between holding rib (9) and clamp (2), and wherein the clamp comprises a circularly extending clamping band of metal, **characterised in that** the clamping band (10) is elastic and of uniform thickness and that the portion (4) of the clamping band (10), which portion is located between the edges (3) of the clamping band (10) has in a tensioned state of the clamp (2) a distance from the hose (8).

2. The hose coupling according to claim 1, **characterised in that** the radially outer contour of an axial cross-section of the holding rib (9) is uniformly arched.

3. The hose coupling according to claim 1 or 2, **characterised in that** the radially outer contour of the axial cross-section of the holding rib (9) is circular arc-shaped.

4. The hose coupling according to claim 3, **characterised in that** the circumcircle of the holding rib (9) at one end thereof located in the connected state of pipe (5) and hose (8) on a side of the free pipe end located in the hose (8) is smaller than the circumcircle at the other end of the holding rib.

5. The hose coupling according to one of the claims 1 to 4, **characterised in that** the cross-sectional contour of the clamping band (10) between the edges (3) thereof is uniformly radially outwardly arched.

6. The hose coupling according to claim 5, **characterised in that** the cross-sectional contour of the clamping band (10) is circular arc-shaped.

7. The hose coupling according to claims 2 and 6, **characterised in that** the radius of curvature (R₁) of the radially outer contour of the axial cross-section of the holding rib (9) is greater than the radius of curvature (R₂) of the inner contour of the axial cross-section of the clamping band (10).

8. The hose coupling according to one of the claims 1 to 7, **characterised in that** the pipe (5) is of metal, particularly light metal.

## Revendications

1. Raccord express doté d'un collier (2), serrable autour de son axe longitudinal (1), dont les bords (3) se situent plus près de l'axe longitudinal (1) que la zone (4) située entre les bords(3),
et doté d'un tube (5), sur l'une des extrémités (6) duquel une extrémité (7) du tuyau (8) est montable et blocable au moyen du collier (2),
l'extrémité (6) du tube (5) étant dotée d'une nervure de retenue (9) périphérique, sur laquelle l'extrémité (7) du tuyau (8) peut glisser et au niveau de laquelle le collier (2) est serrable sur le tuyau (8), de sorte que le tuyau (8) est coincé entre la nervure de retenue (9) et le collier (2), le collier présentant une bande de serrage métallique périphérique de forme circulaire
**caractérisé en ce que** la bande de serrage (10) est élastique et d'épaisseur régulière et **en ce qu'**à l'état serré du collier (2), la zone (4) entre les bords (3) de la bande de serrage (10) présente un écartement par rapport au tuyau (8).

2. Raccord selon la revendication 1, **caractérisé en ce que** le contour extérieur radial de la section axiale de la nervure de retenue (9) est régulièrement bombé.

3. Raccord selon l'une des revendications 1 ou 2, **caractérisé en ce que** le contour extérieur radial de la section axiale de la nervure de retenue (9) est en forme d'arc de cercle.

4. Raccord selon la revendication 3, **caractérisé en ce qu'** à l'état assemblé du tube (5) et du tuyau (8), la circonférence de la nervure de retenue (9) du coté de son extrémité libre, située dans le tuyau (8), est inférieure à la circonférence au niveau de son autre extrémité.

5. Raccord selon l'une des revendications 1 à 4, **caractérisé en ce que** le contour transversal extérieur de la bande de serrage (10) est régulièrement bombé de manière radiale vers l'extérieur entre ses bords (3).

6. Raccord selon la revendication 5, **caractérisé en ce que** le bombement du contour transversal de la bande de serrage (10) est en forme d'arc de cercle.

7. Raccord selon la revendication 2 et la revendication 6, **caractérisé en ce que** le rayon de courbure (R₁) du contour radial extérieur de la section axiale de la nervure de retenue (9) est supérieur au rayon de courbure (R₂) du contour interne de la section axiale de la bande de serrage (10).

8. Raccord selon l'une des revendications 1 à 7, **caractérisé en ce que** le tube (5) est constitué de métal, en particulier de métal léger.
